# EUROPÄISCHE PATENTSCHRIFT

(11) **EP 1 897 728 B1**
(45) Veröffentlichungstag und Bekanntmachung des Hinweises auf die Patenterteilung: **08.01.2014**
(21) Anmeldenummer: 07015447.1
(22) Anmeldetag: 07.08.2007
(51) Int. Cl.: B60J 1/18, B60J 7/12

(54) **Faltbares Fahrzeugverdeck**
Foldable vehicle soft top
Capote de cabriolet pliable

(30) Priorität: 08.09.2006 DE 102006042182
(43) Veröffentlichungstag der Anmeldung: 12.03.2008
(73) Patentinhaber: Dr. Ing. h.c. F. Porsche AG, 70435 Stuttgart (DE)
(72) Erfinder: Fröschle, Mathias, 73760 Ostfildern (DE)

(56) Entgegenhaltungen:
- EP-A1- 0 878 337
- EP-A1- 1 160 109
- EP-A1- 1 184 218
- DE-A1- 4 010 276
- DE-A1- 4 341 079
- DE-A1-102004 049 674
- DE-U1- 29 512 019
- US-A- 6 015 181
- US-A1- 2004 251 713

## Beschreibung

Die vorliegende Erfindung betrifft ein faltbares Fahrzeugverdeck nach dem Oberbegriff des Anspruchs 1. Das Dokument DE 4010276 A offenbart ein solches Verdeck.

Um ein faltbares Fahrzeugverdeck in eine Ablage- und eine Schließstellung zu bewegen und es in dieser auszusteifen und zu spannen, ist es grundsätzlich bekannt, ein Verdeckgestänge mit Spriegeln vorzusehen. Zur Vergrößerung des Blickfeldes ist es weiterhin bekannt, in dem Verdeck eine durchsichtige Heckscheibe anzuordnen.

Um beide Funktionen gemeinsam zu erfüllen, schlägt die DE 100 29 472 B4 ein faltbares Fahrzeugverdeck mit einem U-förmigen heckseitigen Rahmen vor, der durch ein Verdeckgestänge in eine Ablage- und eine Schließstellung gesteuert werden kann. An dem Rahmen ist ein Verdeckbezug dauerhaft oder lösbar durch eine Kleb-, Schraub-, Naht- oder Klemmverbindung befestigt und wird so durch den als Teil des Verdeckgestänges fungierenden Rahmen gespannt und ausgesteift. Eine Heckscheibe ist ebenfalls dauerhaft oder lösbar durch eine Kleb-, Schraub- oder Klemmverbindung an dem Rahmen befestigt, der damit beiden Funktionen dient.

Um das Verdeck als Ganzes gegen die Umgebung abzudichten, erfordert diese Lösung jedoch nachteilig eine erste dichte Verbindung zwischen dem Rahmen und dem daran befestigten Verdeckbezug und eine zusätzliche zweite dichte Verbindung zwischen dem Rahmen und der separat befestigten Heckscheibe. Diese zwei Verbindungen erhöhen einerseits den Herstellungs- und (De-) Montageaufwand und schaffen andererseits zusätzliche mögliche Wassereintrittsstellen.

In ähnlicher Weise schlägt die DE 43 16 330 A1 vor, den Verdeckbezug an einem dort als Scheibenfassung bezeichneten Rahmen zu befestigen, der in der Schließstellung den Verdeckbezug spannt und hierbei die Funktion eines Eckspriegels übernimmt. Eine Heckscheibe ist ihrerseits in nicht näher erläuteter Weise in den Rahmen integriert.

Auch die DE 199 56 330 A1 schlägt vor, Heckscheibe und Verdeckbezug jeweils an einem Rahmen aus einem Aluprofil zu befestigen.

Alle genannten Vorschlägen erfordern jeweils eine dichte Verbindung zwischen Rahmen und Verdeckbezug einerseits und Heckscheibe andererseits.

Aus der DE 199 14 801 C1, der DE 200 08 096 U1 und der DE 100 07 575 A1 ist es an sich bekannt, den Verdeckbezug über eine wulstförmige Scheibenfassung direkt mit der Heckscheibe eines Fahrzeugverdecks zu verbinden. Diese Lösung lässt sich jedoch nicht ohne weiteres bei einer ihrerseits an einem Rahmen befestigten Heckscheibe nach dem eingangs erläuterten Stand der Technik umsetzen, da hierbei die wulstförmige Scheibenfassung die Befestigung der Heckscheibe und des Verdeckbezuges an dem Rahmen verhindern, der zur Abstützung des Verdecks flach ausgebildet ist.

Ausgehend von dem eingangs erläuterten Stand der Technik ist es daher eine Aufgabe der vorliegenden Erfindung, ein faltbares Fahrzeugverdeck mit einer vereinfachten Verbindung zwischen einer Heckscheibe und einem Verdeckbezug zur Verfügung zu stellen, die beide in der Schließstellung von einem Rahmen gestützt werden.

Diese Aufgabe wird erfindungsgemäß durch den Gegenstand des Anspruchs 1 gelöst. Zu bevorzugende Weiterbildungen sind Gegenstand der Unteransprüche.

Ein faltbares Fahrzeugverdeck umfasst einen Verdeckbezug und eine Heckscheibe. Diese kann formstabil oder flexibel sein und ist bevorzugt als durchsichtige Glas- oder Kunststoffscheibe ausgebildet.

An ihrem Außenrand weist die Heckscheibe eine Scheibenfassung auf, die die Heckscheibe bevorzugt längs ihrer Ober- und/oder Seitenkante (n) umfasst. In einer besonders bevorzugten Ausführung umläuft die Scheibenfassung die Heckscheibe von ihrem einen zu ihrem anderen unteren Eckbereich und lässt lediglich die dem Fahrzeugheck zugewandte Unterkante der Heckscheibe frei. Gleichermaßen kann die Scheibenfassung auch längs des gesamten Außenumfanges der Heckscheibe angeordnet sein.

An der Scheibenfassung ist der Verdeckbezug in einer nachfolgend näher beschriebenen Weise befestigt. Damit können in vorteilhafter Weise Heckscheibe und Verdeckbezug einfach und bevorzugt dicht miteinander verbunden werden.

Ein Rahmen stützt in der Schließstellung den Verdeckbezug und definiert dadurch lokal dessen Außenkontur. Mithin kann der Rahmen die Funktion eines seitlichen Spann-, eines Haupt- und insbesondere eines Eckspriegels übernehmen.

Erfindungsgemäß weist nun der Rahmen eine Aussparung auf, in der die Scheibenfassung, die die Heckscheibe mit dem Verdeckbezug verbindet, wenigstens in der Schließstellung ganz oder teilweise aufgenommen ist. Hierdurch ist es vorteilhaft möglich, die an sich bekannte direkte Verbindung zwischen Heckscheibe und Verdeckbezug über eine Scheibenfassung auch bei einem Fahrzeugverdeck mit einem Rahmen einzusetzen, der die Heckscheibe und den Verdeckbezug stützt.

Die erfindungsgemäße Lösung vereint die Vorteile beider bekannten Vorschläge. Zum einen können Heckscheibe und Verdeckbezug in einfacher Weise dicht miteinander verbunden werden. Insbesondere kann auf eine separate Abdichtung zwischen dem Rahmen und der Heckscheibe einerseits und dem Verdeckbezug andererseits verzichtet werden. Gleichwohl kann in einer bevorzugten Ausführung eine solche separate Abdichtung zusätzlich vorgesehen sein, um die Dichtheit des Verdecks weiter zu erhöhen. In einem solchen Fall ist es auch nicht notwendig, dass die Scheibenfassung ihrerseits die Heckscheibe und den Verdeckbezug dicht miteinander verbindet.

Auf der anderen Seite kann der Rahmen vorteilhaft die Funktion eines Verdeckgestellelementes übernehmen, die Heckscheibe zu steuern und in der Schließstellung die Kontur des Verdeckbezuges zu definieren. Wenigstens im letzten Abschnitt einer Bewegung in die Schließstellung kann der Rahmen auch zum Spannen des Verdeckbezuges dienen.

In einer bevorzugten Ausführung ist die Heckscheibe und/oder der Verdeckbezug unlösbar an der Scheibenfassung befestigt. Dies ermöglicht vorteilhaft eine besonders dichte und/oder feste Verbindung der Elemente und kann darüber hinaus die Montage erleichtern. Hierzu können die Heckscheibe und/oder der Verdeckbezug mit der Scheibenfassung beispielsweise verklebt, verschweißt und/oder vernäht sein.

In einer vorteilhaften Weiterbildung dieser Ausführung ist die Scheibenfassung aus einem Kunststoff urgeformt, so dass die Heckscheibe und/oder der Verdeckbezug durch Einlegen in die Form bei der Herstellung der Scheibenfassung mit eingeschäumt, umspritzt oder dergleichen werden.

Bevorzugt ist dabei der Rand der Heckscheibe bzw. des Verdeckbezuges, der beim Herstellvorgang in die Scheibenfassung integriert wird, abgewinkelt. Dies erhöht die Festigkeit der Verbindung und wirkt einem Herausarbeiten auf der Scheibenfassung entgegen. In einer vorteilhaften Weiterbildung kann hierzu der Rand des Verdeckbezugs entsprechend formstabil ausgebildet, beispielsweise durch Befestigen von Metall- oder Kunststoffstreifen verstärkt sein. Zusätzlich oder alternativ kann der Rand der Heckscheibe und/oder des Verdeckbezuges Vorsprünge aufweisen, die sich in der Scheibenfassung formschlüssig verhaken.

In einer alternativen Ausführung der vorliegenden Erfindung ist die Heckscheibe und/oder der Verdeckbezug lösbar an der Scheibenfassung befestigt. Heckscheibe bzw. Verdeckbezug und Scheibenfassung können beispielsweise formschlüssig durch Einführen von einem Randbereich des einen in eine entsprechende Aussparung des anderen Partners verbunden sein. Zusätzlich oder alternativ können sie beispielsweise miteinander verschraubt oder reibschlüssig miteinander verklemmt sein.

Beide Ausführungsformen können auch kombiniert sein, i. e. die Scheibenfassung kann lösbar mit dem Verdeckbezug und unlösbar mit der Heckscheibe oder lösbar mit der Heckscheibe und unlösbar mit dem Verdeckbezug verbunden sein. Diese Kombination vereint die Vorteile beider Ausführungsformen: einerseits eine einfache und zuverlässige Verbindung der unlösbar miteinander verbundenen Elemente und andererseits die Erleichterung der (De-)Montage des gesamten Verdecks durch nachträgliches Verbinden der lösbaren Elemente.

In einer bevorzugten Ausführungsform umgreift die Scheibenfassung den Außenrand der Heckscheibe wulstförmig. Dies erhöht die Dichtheit und Festigkeit der Verbindung und legt vorteilhaft den Verdeckbezug zusätzlich am Rahmen fest, indem die Scheibenfassung in eine entsprechend komplementäre Aussparung eingreift.

Vorteilhafterweise liegt die Scheibenfassung in der Schließstellung in der Aussparung wenigstens teilweise an und greift dadurch formschlüssig in diese ein. Dies stützt die Verbindung und reduziert kleine Bewegungen des Verdeckbezuges gegen die Heckscheibe, die andernfalls die Verbindung belasten und die Lebensdauer des Verdecks vermindern können. In einer alternativen Ausführung der vorliegenden Erfindung liegt die Seitenfassung in der Aussparung nicht auf, was vorteilhaft die Einleitung von Verdeckschwingungen in die Fahrzeugkarosserie verringert und damit störende Geräusche vermeidet.

Bevorzugt ist der Rahmen mit einem oder mehreren Lenkern eines Verdeckgestänges verbunden. Dadurch kann er aus einer Ablagestellung in eine Schließstellung und wieder zurück bewegt werden. Insbesondere ist es durch eine entsprechende Anlenkung möglich, den Verdeckbezug zu spannen.

In einer vorteilhaften Ausführung der vorliegenden Erfindung besteht der Rahmen aus einem oberen Querschenkel und/oder einem oder zwei Seitenschenkeln. Dies ermöglicht es, den Verdeckbezug durch Stützung in vorgegebenen, durch die Schenkel definierten Bereichen zu stützen und erlaubt so eine nahezu beliebige Formgebung der Verdeckkontur. In einer besonders bevorzugten Ausführung ist der Rahmen in Fahrzeuglängsrichtung gesehen im Wesentlichen U-förmig ausgebildet und lässt die Unterkante der Heckscheibe frei, da hier das Verdeck nicht gestützt werden muss.

Bevorzugt ist der Rahmen fest, beispielsweise aus Metall und/oder Kunststoff ausgebildet. In einer vorteilhaften Ausführung ist der Rahmen als offenes Profil mit einer ersten Auflagefläche zum Stützen den Verdeckbezugs, einer zweiten Auflagefläche zum Stützen der Heckscheibe und einer dieser Flächen verbindenden Mulde ausgebildet, die die Aussparung definiert. Ein solches offenes Profil kann relativ große Auflageflächen zur Unterstützung der Heckscheibe und/oder des Verdeckbezugs bei gleichzeitig geringem Rahmengewicht zur Verfügung stellen. Solche relativ großen Auflageflächen verringern die Flächenlast und verbessern somit die Krafteinleitung in den Rahmen.

Vorteilhaft kann ein solches offenes Profil eine ausreichende Flexibilität zur Verfügung stellen, um kleine Bewegungen des Verdeckbezuges gegen die Heckscheibe zu kompensieren. Damit kann sich der Verdeckbezug jeweils in Kraftrichtung einstellen, was die Belastung des Verdeckbezuges und der Scheibenfassung verringert. Zudem wird der Verdeckbezug beim Einnehmen der Schließstellung sanfter gespannt.

Insbesondere im Hinblick auf dieses Einnehmen der Schließstellung, bei der die erste Auflagefläche in Kontakt mit dem Verdeckbezug kommt, kann die erste Auflagefläche in einer vorteilhaften Weiterbildung an ihrem von der Mulde abgewandten Ende zur Fahrzeuginnenseite hin abgewinkelt sein. Eine solche Abkantung bzw. Abrundung vermeidet vorteilhaft eine Kerbwirkung auf den gespannten Verdeckbezug.

In einer besonders bevorzugten Ausführung stützt der Rahmen in der Schließstellung den Verdeckbezug und die Heckscheibe von der Fahrzeuginnenseite her. Damit ist der Rahmen durch den Verdeckbezug und die Scheibenfassung wenigstens teilweise verborgen und stört die einheitliche Anmutung des Fahrzeugverdeckes nicht.

In einer alternativen Ausgestaltung kann der Verdeckrahmen die Heckscheibe und den Verdeckbezug auch von der Fahrzeugaußenseite her stützen, was vorteilhaft die Scheibenfassung gegen Umwelteinflüsse, insbesondere Fahrtwind und Regen abschirmt.

In einer vorteilhaften Weiterbildung weist der Rahmen in seinen oberen Eckbereichen Erweiterungen auf, die den oberen und/oder seitlichen hinteren Bereich des Verdeckbezuges stützen und spannen. Somit übernimmt der Rahmen nach dieser Ausführung vorteilhaft die Funktion eine Eckspriegels.

Bevorzugt ist der Rahmen fest mit der Heckscheibe verbunden. Diese kann insbesondere an den Rahmen geklebt, geschraubt oder geklemmt sein.

Auch der Verdeckbezug kann fest mit dem Rahmen verbunden sein, beispielsweise durch Kleben, Nähen und/oder Verschweißen.

Beide Ausführungen können mit einer kombiniert, i.e. der Rahmen mit der Heckscheibe und dem Verdeckbezug verbunden sein. Dies entlastet die Scheibenfassung zwischen Heckscheibe und Verdeckbezug. In einer bevorzugten Ausführungsform ist jedoch nur die Heckscheibe mit dem Rahmen fest verbunden, während der Verdeckbezug erst beim Einnehmen der Schließstellung mit dem Rahmen in Kontakt kommt und durch diesen gestützt und gespannt wird.

Weiter Aufgaben, Vorteile und Merkmale und Aufgaben der vorliegenden Erfindung ergeben sich aus den Unteransprüchen und den nachfolgend beschriebenen Ausführungsbeispielen. Hierzu zeigt:
- Fig. 1: ein faltbares Fahrzeugverdeck nach einer Ausführung der vorliegenden Erfindung in perspektivischer Ansicht; und
- Fig. 2: einen Schnitt längs der Linie II-II in Fig. 1.

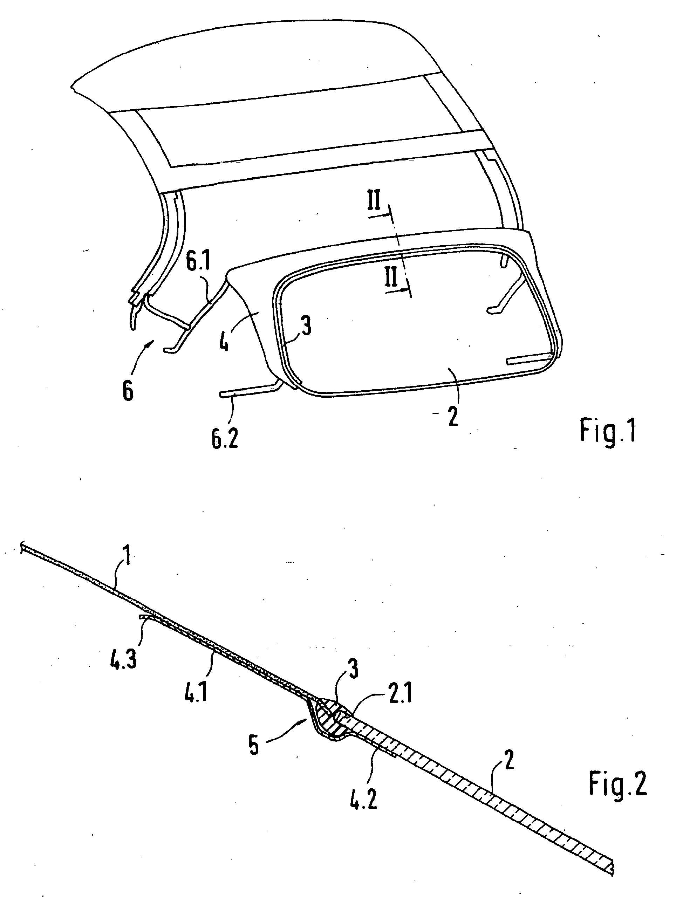

Fig. 1 zeigt ein Fahrzeugverdeck nach einer Ausführung der vorliegenden Erfindung. Zur Verdeutlichung ist hier ein in Fig. 2 sichtbarer Verdeckbezug 1 weggelassen, um das Verdeckgestell und insbesondere einen Rahmen 4 zu zeigen.

Das Fahrzeugverdeck umfasst eine durchsichtige Heckscheibe 2 aus Glas, die längs ihrer Ober- und Seitenkanten von oben auf eine zweite Auflagefläche 4.2 eines Rahmens 4 aufgeklebt ist. Der metallische Rahmen 4 ist über zwei Lenker 6.1, 6.2 mit dem Verdeckgestell 6 so gekoppelt, dass er aus einer (nicht dargestellten) Ablagestellung, in der er zusammen mit der Heckscheibe 2 in einem Verdeckkasten des Fahrzeugs aufgenommen ist, in die in den Figuren gezeigte Schließstellung bewegt wird und dabei die Heckscheibe 2 in ihre Endlage positioniert.

Im Wesentlichen im Bereich des Rahmens 4 umgibt eine Scheibenfassung 5 den Außenrand 2.1 der Heckscheibe 2. Auf der anderen, der Heckscheibe abgewandten Seite der Scheibenfassung ist ein Rand des in Fig. 2 gezeigten Verdeckbezugs 1 integriert. Hierzu werden der Außenrand 2.1 der Heckscheibe und der Randbereich des Verdeckbezugs 1 gemeinsam in eine Form eingelegt und mit einem Kunststoffmaterial umspritzt, das nach Abkühlen bzw. Aushärten die Scheibenfassung 3 bildet.

Der Rand des Stoffverdeckbezugs 1 ist mit einem aufgeklebten Kunststoffstreifen (nicht dargestellt) verstärkt, der abgewinkelt und in die Scheibenfassung wenigstens teilweise integriert ist. Der Außenrand 2.1 der Heckscheibe 2 weist mehrer, in den Figuren nicht sichtbare tannenförmige Vorsprünge auf, die ebenfalls in der Scheibenfassung 3 eingebettet sind. Diese Ausbildung der Randbereiche verstärkt vorteilhaft die Verbindung der Scheibenfassung 3 mit dem Verdeckbezug 1 und der Heckscheibe 2.

Wie in Fig. 2 zu erkennen, ist der Rahmen 4 als offenes Profil mit einer ersten Auflagefläche 4.1 und mit einer zweiten Auflagefläche 4.2 ausgebildet, die miteinander durch eine Mulde verbunden sind, welche die Aussparung 5 definiert, in der die Scheibenfassung 3 sich unter Formschluss mit einem Teil ihrer Oberfläche abstützt. Während der Rahmen 4 an seiner zweiten Auflagefläche 4.2 durch Kleben fest mit der Heckscheibe 2 verbunden ist, kommt seine erste Auflagefläche 4.1 erst beim Einnehmen der Schließstellung mit dem Verdeckbezug 1 in Kontakt und spannt diesen. Hierzu ist die erste Auflagefläche 4.1, wie in Fig. 1 erkennbar, an den oberen Eckbereichen des Rahmens 4 zur Seite verbreitert und abgewinkelt, so dass der Rahmen 4 die Funktion eines in Verdeckbezug 1 spannenden und formenden Eckspriegels übernimmt.

Um die Kerbwirkung einer scharfen Kante zu vermeiden, die den Verdeckbezug 1 bei dessen leichten, durch den Fahrtwind induzierten Bewegungen beschädigen könnte, ist die erste Auflagefläche 4.1 an ihrem von der Mulde abgewandten Ende 4.3 zur Fahrzeuginnenseite in abgewinkelt, so dass sie in der Schließstellung nicht mit dem Verdeckbezug in seiner Idealkontur in Kontakt kommt. Diese Abrundung 4.3 verhindert auch eine Beschädigung des Verdeckbezugs 1, während der Rahmen 4 mit diesem in Kontakt kommt und ihn in die Schließstellung spannt.

## Patentansprüche

1. Faltbares Fahrzeugverdeck, insbesondere für einen Personenkraftwagen, mit einem Verdeckbezug (1); einer Heckscheibe (2), die an ihrem Außenrand (2.1) eine Scheibenfassung (3) aufweist, an der der Verdeckbezug befestigt ist; und einem Rahmen (4), der in einer Schließstellung den Verdeckbezug und die Heckscheibe stützt; **dadurch gekennzeichnet, dass** der Rahmen eine Aussparung (5) aufweist, in der die Scheibenfassung in der Schließstellung aufgenommen ist.

2. Fahrzeugverdeck nach Anspruch 1, **dadurch gekennzeichnet, dass** die Heckscheibe (2) und/oder der Verdeckbezug (1) unlösbar an der Scheibenfassung (3) befestigt ist.

3. Fahrzeugverdeck nach Anspruch 2, **dadurch gekennzeichnet, dass** die Scheibenfassung (3) aus Kunststoff urgeformt ist und die Heckscheibe (2) und/oder der Verdeckbezug (1) in der Scheibenfassung mit eingeschäumt oder umspritzt ist.

4. Fahrzeugverdeck nach Anspruch 3, **dadurch gekennzeichnet, dass** der Außenrand (2.1) der Heckeibe (2) und/oder der Rand des Verdeckbezugs (1), der in der Scheibenfassung mit eingeschäumt oder umspritzt ist, abgewinkelt und/oder mit Vorsprüngen ausgebildet ist.

5. Fahrzeugverdeck nach Anspruch 1, **dadurch gekennzeichnet, dass** die Heckscheibe (2) und/oder der Verdeckbezug (1) lösbar an der Scheibenfassung (3) befestigt ist.

6. Fahrzeugverdeck nach einem der vorhergehenden Ansprüche, **dadurch gekennzeichnet, dass** die Scheibenfassung (3) den Außenrand (2.1) der Heckscheibe, bevorzugt entlang ihres oberen und/oder seitlichen Außenrandes, wulstförmig umgreift.

7. Fahrzeugverdeck nach einem der vorhergehenden Ansprüche, **dadurch gekennzeichnet, dass** die Scheibenfassung formschlüssig in die Aussparung eingreift.

8. Fahrzeugverdeck nach einem der vorhergehenden Ansprüche, **dadurch gekennzeichnet, dass** der Rahmen (4) mit einem Lenker (6.1, 6.2) eines Verdeckgestänges (6) verbunden ist.

9. Fahrzeugverdeck nach einem der vorhergehenden Ansprüche, **dadurch gekennzeichnet, dass** der Rahmen (4) einen Quer- und/oder wenigstens einen Seitenschenkel aufweist.

10. Fahrzeugverdeck nach einem der vorhergehenden Ansprüche, **dadurch gekennzeichnet, dass** der Rahmen (4) als offenes Profil mit einer ersten Auflagefläche (4.1) zum Stützen des Verdeckbezugs, einer zweiten Auflagefläche (4.2) zum Stützen der Heckscheibe und einer diese verbindenden Mulde ausgebildet ist, die die Aussparung (5) bildet.

11. Fahrzeugverdeck nach Anspruch 9, **dadurch gekennzeichnet, dass** die erste Auflagefläche (4.1) an ihrem von der Mulde abgewandten Ende (4.3) zur Fahrzeuginnenseite hin abgewinkelt ist.

12. Fahrzeugverdeck nach einem der vorhergehenden Ansprüche, **dadurch gekennzeichnet, dass** der Rahmen (4) in der Schließstellung den Verdeckbezug und die Heckscheibe von der Fahrzeuginnenseite her stützt.

13. Fahrzeugverdeck nach einem der vorhergehenden Ansprüche, **dadurch gekennzeichnet, dass** der Rahmen, insbesondere im oberen Eckbereich der Heckscheibe, so ausgebildet ist, dass er in der Schließstellung einen oberen und/oder seitliche Bereiche des Verdeckbezuges stützt.

14. Fahrzeugverdeck nach einem der vorhergehenden Ansprüche, **dadurch gekennzeichnet, dass** der Rahmen fest mit der Heckscheibe und/oder dem Verdeckbezug verbunden ist.

## Claims

1. Foldable vehicle top, in particular for a passenger vehicle, with a top cloth (1); a rear window (2), the outer border (2.1) of which has a window mount (3) to which the top cloth is fastened; and a frame (4) which, in a closed position, supports the top cloth and the rear window; **characterized in that** the frame has a recess (5) in which the window mount is accommodated in the closed position.

2. Vehicle top according to Claim 1, **characterized in that** the rear window (2) and/or the top cloth (1) is/are fastened nonreleasably to the window mount (3).

3. Vehicle top according to Claim 2, **characterized in that** the window mount (3) is formed from plastic, and the rear window (2) and/or the top cloth (1) is/are foamed into the window mount or encapsulated therein by injection molding.

4. Vehicle top according to Claim 3, **characterized in that** the outer border (2.1) of the rear window (2) and/or the border of the top cloth (1), which is foamed into the window mount or encapsulated therein by injection molding, is/are formed in an angled manner and/or with projections.

5. Vehicle top according to Claim 1, **characterized in that** the rear window (2) and/or the top cloth (1) is/are fastened releasably to the window mount (3).

6. Vehicle top according to one of the preceding claims, **characterized in that** the window mount (3) engages around the outer border (2.1) of the rear window, preferably along its upper and/or lateral outer border, in a bead-shaped manner.

7. Vehicle top according to one of the preceding claims, **characterized in that** the window mount engages in the recess in a form-fitting manner.

8. Vehicle top according to one of the preceding claims, **characterized in that** the frame (4) is connected to a link (6.1, 6.2) of a top linkage (6).

9. Vehicle top according to one of the preceding claims, **characterized in that** the frame (4) has a traverse limb and/or at least one side limb.

10. Vehicle top according to one of the preceding claims, **characterized in that** the frame (4) is designed as an open profile with a first supporting surface (4.1) for supporting the top cloth, a second supporting surface (4.2) for supporting the rear window and a trough which connects said supporting surfaces and forms the recess (5).

11. Vehicle top according to Claim 9, **characterized in that** the first supporting surface (4.1) is angled at its end (4.3) which faces away from the trough toward the inside of the vehicle.

12. Vehicle top according to one of the preceding claims, **characterized in that**, in the closed position, the frame (4) supports the top cloth and the rear window from the inside of the vehicle.

13. Vehicle top according to one of the preceding claims, **characterized in that** the frame, in particular in the upper corner region of the rear window, is designed in such a manner that, in the closed position, it supports an upper and/or lateral regions of the top cloth.

14. Vehicle top according to one of the preceding claims, **characterized in that** the frame is connected fixedly to the rear window and/or to the top cloth.

## Revendications

1. Capote pliable de véhicule, en particulier pour une voiture particulière, comprenant un revêtement de capote (1) ; une vitre arrière (2) qui comprend sur son bord extérieur (2.1) un encadrement de vitre (3) auquel est fixé le revêtement de capote ; et un cadre (4) qui supporte, dans une position de fermeture, le revêtement de capote et la vitre arrière ; **caractérisée en ce que** le cadre comprend un évidement (5) dans lequel est reçu l'encadrement de vitre dans la position de fermeture.

2. Capote de véhicule selon la revendication 1, **caractérisée en ce que** la vitre arrière (2) et/ou le revêtement de capote (1) est/sont fixé(e)(s) de manière non amovible à l'encadrement de vitre (3).

3. Capote de véhicule selon la revendication 2, **caractérisée en ce que** l'encadrement de vitre (3) est formé à partir de plastique, et la vitre arrière (2) et/ou le revêtement de capote (1) est/sont enrobé(e) (s) par moussage ou enrobé(e) (s) par injection dans l'encadrement de vitre.

4. Capote de véhicule selon la revendication 3, **caractérisée en ce que** le bord extérieur (2.1) de la vitre arrière (2) et/ou le bord du revêtement de capote (1), qui est enrobé par moussage ou enrobé par injection dans l'encadrement de vitre, est/sont réalisé(s) de manière coudée et/ou avec des parties saillantes.

5. Capote de véhicule selon la revendication 1, **caractérisée en ce que** la vitre arrière (2) et/ou le revêtement de capote (1) est/sont fixé(e)(s) de manière amovible à l'encadrement de vitre (3).

6. Capote de véhicule selon l'une quelconque des revendications précédentes, **caractérisée en ce que** l'encadrement de vitre (3) vient en prise, en forme de bourrelet, autour du bord extérieur (2.1) de la vitre arrière, de préférence le long de son bord extérieur supérieur et/ou latéral.

7. Capote de véhicule selon l'une quelconque des revendications précédentes, **caractérisée en ce que** l'encadrement de vitre vient en prise par complémentarité de forme dans l'évidement.

8. Capote de véhicule selon l'une quelconque des revendications précédentes, **caractérisée en ce que** le cadre (4) est relié à un bras de liaison (6.1, 6.2) d'une tringlerie de capote (6).

9. Capote de véhicule selon l'une quelconque des revendications précédentes, **caractérisée en ce que** le cadre (4) comprend une branche transversale et/ou au moins une branche latérale.

10. Capote de véhicule selon l'une quelconque des revendications précédentes, **caractérisée en ce que** le cadre (4) est réalisé sous forme de profilé ouvert comprenant une première surface d'appui (4.1) pour supporter le revêtement de capote, une deuxième surface d'appui (4.2) pour supporter la vitre arrière et une cavité reliant celles-ci, laquelle cavité forme l'évidement (5).

11. Capote de véhicule selon la revendication 9, **caractérisée en ce que** la première surface d'appui (4.1) est coudée, à son extrémité (4.3) opposée à la cavité, en direction du côté intérieur du véhicule.

12. Capote de véhicule selon l'une quelconque des revendications précédentes, **caractérisée en ce que**, dans la position de fermeture, le cadre (4) supporte, depuis le côté intérieur du véhicule, le revêtement de capote et la vitre arrière.

13. Capote de véhicule selon l'une quelconque des revendications précédentes, **caractérisée en ce que** le cadre, en particulier dans la région de coin supérieure de la vitre arrière, est réalisé de telle sorte qu'il supporte dans la position de fermeture une région supérieure et/ou latérale du revêtement de capote.

14. Capote de véhicule selon l'une quelconque des revendications précédentes, **caractérisée en ce que** le cadre est relié solidement à la vitre arrière et/ou au revêtement de capote.
